# EUROPEAN PATENT SPECIFICATION

(11) **EP 3 671 055 B1**
(45) Date of publication and mention of the grant of the patent: **18.10.2023**
(21) Application number: 17921840.9
(22) Date of filing: 17.08.2017
(51) Int. Cl.: F24F 11/30, F24F 7/08, F24F 11/77, F24F 12/00, F24F 11/81, F24F 11/74, F24F 110/22, F24F 110/20, F24F 110/12, F24F 110/10, F24F 11/61

(54) **HEAT EXCHANGING VENTILATION DEVICE**
WÄRMETAUSCHENDE BELÜFTUNGSVORRICHTUNG
DISPOSITIF DE VENTILATION À ÉCHANGE DE CHALEUR

(43) Date of publication of application: 24.06.2020
(73) Proprietor: Mitsubishi Electric Corporation, Chiyoda-ku Tokyo 100-8310 (JP)
(72) Inventor: SASASHIGE, Yuji, Tokyo 100-8310 (JP)
(74) Representative: Witte, Weller & Partner Patentanwälte mbB
(86) International application number: PCT/JP2017/029511
(87) International publication number: WO 2019/035194

(56) References cited:
- EP-A1- 2 902 720
- DE-A1-102013 216 306
- JP-A- S6 341 750
- JP-A- S6 341 750
- JP-A- H03 144 238
- JP-A- H03 144 238
- JP-A- H05 311 956
- JP-A- H06 123 473
- JP-A- H09 178 242
- JP-A- S56 124 847
- JP-A- S62 123 236
- JP-A- 2002 071 184
- JP-A- 2004 293 869
- JP-A- 2007 271 128
- JP-A- 2012 042 129
- JP-A- 2014 044 011
- JP-A- 2014 044 011
- NZ-A- 561 938

## Description

### Field

The present invention relates to a heat exchange ventilator.

### Background

A heat exchange ventilator is equipped with a heat exchanger inside a housing, and performs ventilation while allowing heat exchange between outdoor air to be supplied into a room and indoor air to be discharged from the room. The heat exchange ventilator switches between a heat exchange ventilation operation and a normal ventilation operation during operation.

The heat exchange ventilation operation is an operation of making heat exchange between the outdoor air and the indoor air, and then making the outdoor air supplied into the room. As a result of the heat exchange before the outdoor air is supplied, the room is ventilated with making a temperature difference and a humidity difference between the outdoor air and the indoor air smaller.

The normal ventilation operation is an operation of making the outdoor air supplied into the room without heat exchange with the indoor air. As a result of supplying the outdoor air without heat exchange, the indoor temperature is made closer to a set indoor temperature and the room is ventilated. Thus, the normal ventilation operation has an air-conditioning effect of cooling or heating the room by the outdoor air. In the normal ventilation operation, air is sent at an air volume larger than that in the heat exchange ventilation operation in order to enhance the ventilation capacity and the air-conditioning capacity.

A conventional heat exchange ventilator taught in Patent Literature 1 switches between the heat exchange ventilation operation and the normal ventilation operation on the basis of a result of comparison between an instantaneous value of the outdoor temperature and an instantaneous value of the indoor temperature.

Patent Literature 2, according to its abstract, states that a ventilation device for installation in an outer wall of a room is described, the ventilation device having: a fan device for conveying a first air exchange flow leading into the room and a second air exchange stream leading out of the space, a heat exchanger for heat transfer between the air exchange streams, a bypass channel to bypass the first air exchange stream bypassing the heat exchanger to lead into the room a measuring device for measuring the temperature of the intake air of both air exchange flows, an input device, which is designed so that a user can use it for a Operation of the ventilation device, and an operation control device, which on the basis of the specifications and the temperature signals, the fan device and the air flow control device for setting the Controls air exchange currents, and if there is a difference between the outside temperature and the inside temperature that exceeds a predetermined threshold value, the ventilation device controls the ventilation device into a direct ventilation mode in which the fan device (7, 8) has at least 50% of the maximum value of the air delivery rate running.

Patent Literature 3, according to its abstract, states that, to provide a total heat exchange type ventilation device which reduces an introduction amount of outdoor air by sampling measuring outdoor temperature and indoor temperature periodically and acquiring temperature information even when the device is in a stop state, thereby reducing an air conditioning load, a control unit is provided capable of controlling the switching of a damper motor, and an operation and a stop of an exhaust fan motor and an air supply fan motor. The control unit operates a total heat exchange type ventilation device for a short time after a certain time has passed after the stop of the total heat exchange type ventilation device, determines a difference of outdoor temperature and indoor temperature information of which is acquired by detection means of the outdoor temperature and the indoor temperature provided inside the total heat exchange type ventilation device. When the indoor temperature is higher than the outdoor temperature during cooling, or when the indoor temperature is lower than the outdoor temperature during heating, the control part operates the damper motor by switching it to a bypass ventilation for directly taking in the outdoor air inside, thereby, the indoor air conditioning machine load is reduced.

Patent Literature 4, according to its abstract, states that, to adjust properly an amount of discharging air by a method wherein an operation is started when a smoke sensing element detects an oxidizing or reducing gas or a temperature sensing element detects an increased temperature higher than a predetermined value, a discharging amount is determined in response to a temperature at a starting of operation and another temperature during operation, and the operation is stopped when its difference is returned to a value less than a predetermined value, a large hood is operated by an operation starting means just after a smoke sensing element detects an oxidizing and reducing gas of more than a predetermined amount, or a temperature sensing element detects an increased temperature more than a predetermined value. An amount of discharging air from the range hood is determined in response to a difference between a temperature at a staring of operation and a detected temperature during operation by a discharging amount determined means. When a difference between a detected temperature when the operation is started and another temperature during operation is returned to a value less than the predetermined value by the operation stopping means, the operation of the range hood is stopped. With such an arrangement, an environment can be kept at a superior condition with a proper amount of discharging air.

Patent Literature 5, according to its abstract, states that, to automatically prevent a ventilating fan from chattering by measuring the magnitude of the rate of room temperature change, determining an appropriate rate of ventilation based on the measurement result, and switching the motor speed selection notch, a temperature sensor is disposed on the ceiling of an orifice to detect the room temperature of a room in which a ventilating fan is attached, and the detection signal of the temperature sensor is inputted to a control device in the inside of the orifice. The control device comprises a temperature changing rate measuring means to which the output of the temperature sensor is inputted, a ventilating rate determining means which determines the rate of ventilation of a ventilating fan based on the measured temperature changing rate and a notch selecting means which selects either a high or low setting of a motor based on the determined ventilating rate. By detecting the rate of the room temperature change DELTAc within a unit time DELTAt by the temperature sensor, a measurement of the temperature changing rate DELTAc/DELTAt of the room is taken, and, depending on said temperature changing rate DELTAc/DELTAt of the room, the rate of ventilation, i.e. motor speed, of the ventilating fan is determined. Therefore, the generation of the chattering can be prevented.

Patent Literature 6, according to its abstract, states that temperature and humidity sensors are located on outside air inlet and on the inside air inlet. A controlling unit controls volume of air supplied and exhausted by respective fans and based upon the temperature and humidity of the respective sensors. The two flows exchange heat via heat exchanger. Respective dampers are provided to bypass air supply and air exhaust so as to bypass the heat exchanger under specified temperatures and humidity values.

Patent Literature 7, according to its abstract, states that a controller is provided with an acquiring section, a calculating section, and a determining section. The acquiring section acquires information on outdoor temperature, indoor temperature, and set temperature of an air conditioner. The calculating section calculates an air conditioner consumed power reduction amount and a ventilation apparatus consumed power amount which is consumed by the ventilation apparatus in a case where outdoor air cooling or outdoor air heating is performed. The determining section determines that outdoor air cooling or outdoor air heating is to be performed when the air conditioner consumed power reduction amount is greater than the ventilation apparatus consumed power amount in a case where the outdoor temperature, the indoor temperature, and the set temperature satisfy predetermined conditions.

### Citation List

### Patent Literature

Patent Literature 1: Japanese Patent Application Laid-open No. 2001-304645
Patent Literature 2: DE 10 2013 216 306 A1
Patent Literature 3: JP 2014 044011 A
Patent Literature 4: JP H03 144238 A
Patent Literature 5: JP S63 41750 A
Patent Literature 6: NZ 561938 A
Patent Literature 7: EP 2 902 720 A1

### Summary

### Technical Problem

The air-conditioning load in a room in which a heat exchange ventilator is installed varies depending on such conditions as the volume of the room and whether or not an air conditioner is used. Therefore, depending on the air-conditioning load in the room, an air-conditioning effect may be small even if the normal ventilation operation is continued. The conventional heat exchange ventilator, however, switches between the normal ventilation operation and the heat exchange ventilation operation on the basis of a result of comparison between an instantaneous value of the outdoor temperature and an instantaneous value of the indoor temperature, and accordingly continues the normal ventilation operation even when the air-conditioning effect is small although the normal ventilation operation is carried out. In the normal ventilation operation, because air is sent at an air volume larger than that in the heat exchange ventilation operation, energy for driving fans has been unnecessarily consumed with the normal ventilation operation being continued.

In addition, in the normal ventilation operation, the humidities of the outdoor air and the indoor air cannot be adjusted. In this situation, an air conditioner for adjusting the humidity has been operated while the normal ventilation operation is continued, thereby consuming energy for unnecessarily driving the air conditioner.

The present invention has been made to solve the aforementioned problems, and an object thereof is to provide a heat exchange ventilator capable of preventing unnecessary consumption of energy for driving a fan or an air conditioner.

### Solution to Problem

Therefore, there is provided a control unit of a heat exchange ventilator according to claim 1.

A control unit of a heat exchange ventilator according to a first example of the disclosure makes an air volume of a fan smaller than an air volume during the normal ventilation operation when an amount of time change in a state of the indoor air detected during the normal ventilation operation is smaller than a set threshold.

A control unit of a heat exchange ventilator according to a second example of the disclosure switches from the normal ventilation operation to the heat exchange ventilation operation when an amount of time change in a state of the indoor air detected during the normal ventilation operation is smaller than a set threshold.

### Advantageous Effects of Invention

By reducing the air volume of the fan when the amount of change in the state of the indoor air is smaller than the set threshold, it is made possible to prevent unnecessary consumption of energy for driving the fan when the change in the indoor temperature is small.

By switching the operation from the normal ventilation operation to the heat exchange ventilation operation when the amount of change in the state of the indoor air is smaller than the set threshold, it is made possible to prevent unnecessary consumption of energy for driving another air conditioner when the change in the indoor temperature is small.

### Brief Description of Drawings

FIG. 1 is a configuration diagram illustrating a schematic configuration of a heat exchange ventilator according to a first embodiment.
FIG. 2 is a perspective view illustrating part of a heat exchanger in the first embodiment.
FIG. 3 is a block diagram illustrating a configuration of a processor in the first embodiment.
FIG. 4 is a configuration diagram illustrating a schematic configuration during a heat exchange ventilation operation in the first embodiment.
FIG. 5 is a configuration diagram illustrating a schematic configuration during a normal ventilation operation in the first embodiment.
FIG. 6 is a flowchart illustrating processes performed by the processor in the first embodiment.
FIG. 7 is a configuration diagram illustrating a schematic configuration in a heat exchange ventilation operation in a modification of the first embodiment.
FIG. 8 is a configuration diagram illustrating a schematic configuration in a normal ventilation operation in a modification of the first embodiment.
FIG. 9 is a configuration diagram illustrating a schematic configuration of the heat exchange ventilator according to the first embodiment.
FIG. 10 is a flowchart illustrating processes performed by a processor in a second embodiment.
FIG. 11 is a flowchart illustrating processes performed by a processor in a third embodiment.
FIG. 12 is a flowchart illustrating processes performed by a processor in a fourth embodiment.
FIG. 13 is a flowchart illustrating processes performed by a processor in a fifth embodiment.
FIG. 14 is a block diagram illustrating a configuration of a processor in a sixth embodiment.
FIG. 15 is a flowchart illustrating processes performed by a processor in the sixth embodiment.

### Description of Embodiments

### First Embodiment.

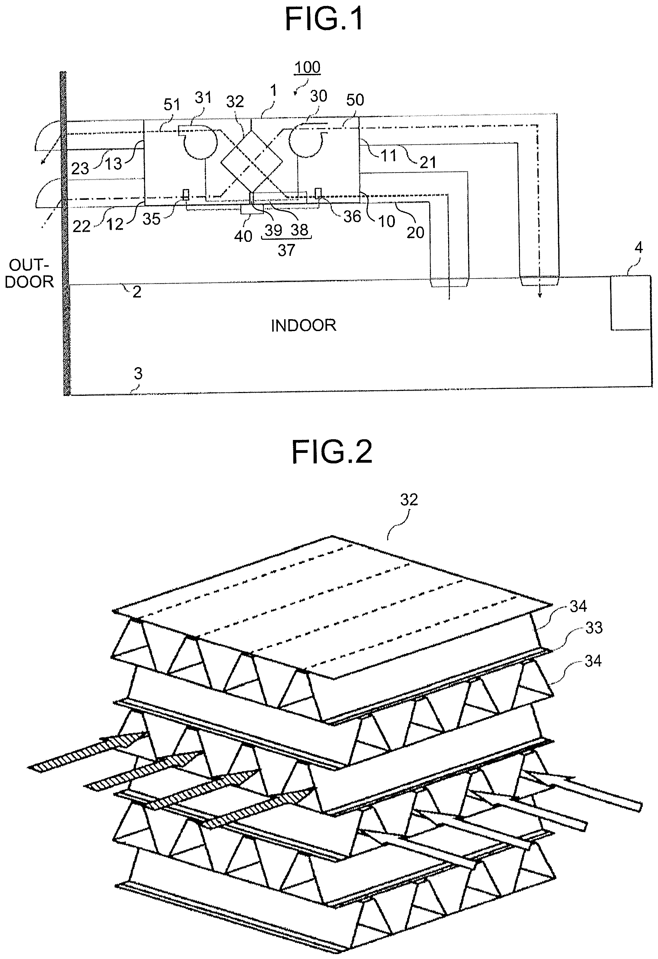

A heat exchange ventilator according to the present invention will be described below. A heat exchange ventilator 100 according to the present embodiment is installed on a ceiling 2 or the like in a room and connected with ducts connecting an inside of the room to an outside thereof. The heat exchange ventilator 100 is capable of performing ventilation while preventing air-conditioning load in the room from increasing when an air conditioner 4 in the room is in operation. The ceiling 2 side will be referred to as an upper side and a floor 3 side will be referred to as a lower side. FIG. 1 is a configuration diagram illustrating a schematic configuration of the heat exchange ventilator 100 according to the first embodiment of the present invention. The heat exchange ventilator 100 includes a housing 1, an air supply fan 30, an air exhaust fan 31, a heat exchanger 32, an outdoor temperature sensor 35, an indoor temperature sensor 36, a switching means 37, and a processor 40.

The housing 1 has a box-like, substantially rectangular parallelepiped shape, with an indoor inlet port 10 and an indoor outlet port 11 formed on one side face thereof. An outdoor inlet port 12 and an outdoor outlet port 13 are formed on another side face of the housing 1 at a position opposed to the one side face. In addition, a supply air passage 50 connecting the outdoor inlet port 12 with the indoor outlet port 11 and an exhaust air passage 51 connecting the indoor inlet port 10 with the outdoor outlet port 13 are formed inside the housing 1.

The ducts to which the heat exchange ventilator 100 is attached include an indoor inlet duct 20 and an indoor outlet duct 21 that connect the heat exchange ventilator 100 with the inside of the room, and an outdoor inlet duct 22 and an outdoor outlet duct 23 that connect the heat exchange ventilator 100 with the outside of the room.

The indoor inlet duct 20 is connected with the indoor inlet port 10, and the indoor outlet duct 21 is connected with the indoor outlet port 11. In addition, the outdoor inlet duct 22 is connected with the outdoor inlet port 12, and the outdoor outlet duct 23 is connected with the outdoor outlet port 13.

The supply fan 30 is provided in the supply air passage 50. The exhaust fan 31 is provided in the exhaust air passage 51.

The indoor temperature sensor 36 is provided between the indoor inlet port 10 and the heat exchanger 32.

The outdoor temperature sensor 35 is provided between the outdoor inlet port 12 and the heat exchanger 32.

The switching means 37 includes a switching plate 38 and a driving unit 39. The switching means 37 is provided in the exhaust air passage 51, and the switching plate 38 is connected with the driving unit 39 such as a motor. The switching plate 38 is attached in such a manner that a set position of the plate can be switched by rotation of the driving unit 39. The switching plate 38 is provided at a position for the plate to contact one side face of the housing 1 or a position for the plate to contact an air passage forming member 14 provided on the housing 1.

The heat exchanger 32 is removably mounted on the housing 1.

The processor 40 is constituted by hardware such as a circuit board or an integrated circuit, for example, and provided in the inside of the heat exchange ventilator 100. The processor 40 is connected to the supply fan 30, the exhaust fan 31, the outdoor temperature sensor 35, and the indoor temperature sensor 36.

Next, a detailed configuration of the heat exchanger 32 will be described with reference to FIG. 2. FIG. 2 is a perspective view illustrating part of the heat exchanger 32. In FIG. 2, hatched arrows indicate the flow of outdoor air that is supplied, and white arrows indicate the flow of indoor air that is discharged. The heat exchanger 32 includes partition members 33 and spacer members 34, which is constructed in a manner such that the partition members 33 and the spacer members 34 are stacked on top of another.

The spacer member 34 is constituted by a corrugated sheet formed into a corrugated shape repeating mountain and valley folds. The spacer members 34 are stacked in such a manner that the folds of the corrugated sheet of one spacer member 34 are perpendicular to those of an adjacent spacer member 34 with the partition member 33 therebetween.

A space formed by two partition members 33 and one spacer member 34 serve as the supply air passage 50 or the exhaust air passage 51. The supply air passage 50 and the exhaust air passage 51 are alternately formed in a stacking direction of them. Because the stacking is made in such a manner that the folds of the corrugated sheets are perpendicular to each other between one and the other spacer members, the supply air passage 50 and the exhaust air passage 51 have a form for them to be perpendicular to each other.

In addition, the partition member 33 is formed of a material having high thermal conductivity and high moisture permeability.

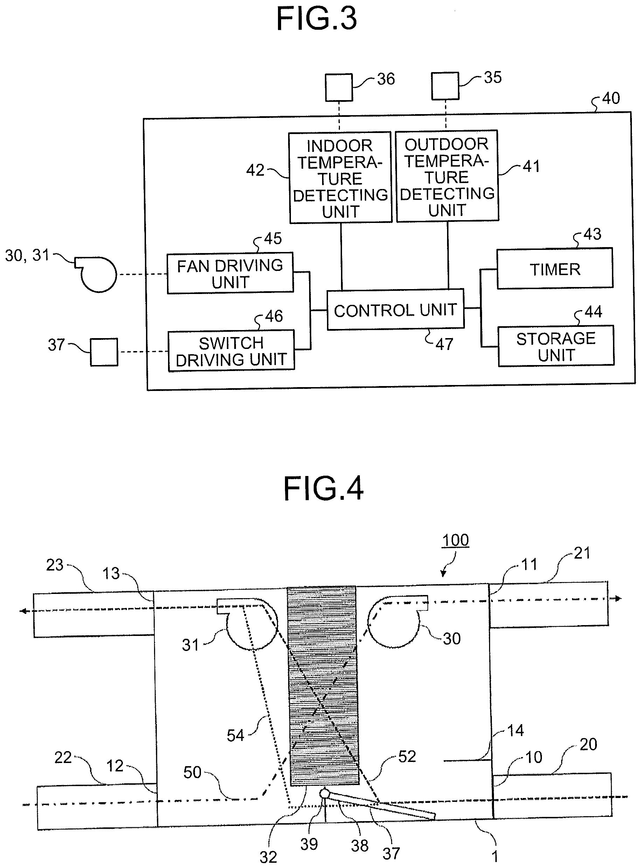

Next, a detailed configuration of the processor 40 will be described with reference to FIG. 3. FIG. 3 is a block diagram illustrating a configuration of the processor 40 in the first embodiment. The processor 40 includes an outdoor temperature detecting unit 41, an indoor temperature detecting unit 42, a timer 43, a storage unit 44, a fan driving unit 45, a switch driving unit 46, and a control unit 47.

The outdoor temperature detecting unit 41 is connected with the outdoor temperature sensor 35.

The indoor temperature detecting unit 42 is connected with the indoor temperature sensor 36.

The fan driving unit 45 is connected with the supply fan 30 and the exhaust fan 31.

The switch driving unit 46 is connected with the switching means 37.

The control unit 47 is constituted by a central processing unit (CPU) or a digital signal processor (DSP), and software executed by the CPU or DSP.

Next, an operation of the heat exchange ventilator 100 will be explained.

The supply fan 30 sends outdoor air into the room. The exhaust fan 31 sends indoor air to the outside of the room. The rotating speeds of the supply fan 30 and the exhaust fan 31 are changed to change their respective volumes of air sent thereby.

The indoor temperature sensor 36 detects an indoor temperature from the indoor air before passing through the heat exchanger 32.

The outdoor temperature sensor 35 detects an outdoor temperature from the outdoor air before passing through the heat exchanger 32. The detected indoor temperature and outdoor temperature are transmitted to the processor 40.

The switching means 37 switches between the heat exchange ventilation operation and the normal ventilation operation by the position of the switching plate 38 being changed.

The heat exchanger 32 exchanges heat between the outdoor air sent to the supply air passage 50 and the indoor air sent to the exhaust air passage 51. Because the partition member 33 is made of a material having high thermal conductivity and high moisture permeability, heat and moisture are exchanged between the indoor air passing through the exhaust air passage 51 and the outdoor air passing through the supply air passage 50. In this manner, the outdoor air can be supplied with temperature and humidity of the outdoor air being close to those of the indoor air.

Next, an operation of the processor 40 will be explained.

The processor 40 makes the heat exchange ventilator 100 operate based on an operation signal transmitted from a remote controller or the like.

The outdoor temperature detecting unit 41 detects an outdoor temperature To. The indoor temperature detecting unit 42 detects an indoor temperature Tr as a state of the indoor air.

The timer 43 counts the time elapsed.

The storage unit 44 stores the detected outdoor temperature and indoor temperature, a time interval Δt set for the indoor temperature detecting unit 42 to detect a temperature, and a threshold. Upon lapse of the time interval Δt after detection of an indoor temperature T1, the indoor temperature detecting unit 42 detects an indoor temperature T2. A temperature difference between the indoor temperatures detected at the time interval Δt is compared with a reference temperature difference T set as a threshold. The reference temperature difference T is stored as a positive value.

The control unit 47 determines an operation of the heat exchange ventilator 100 on the basis of a result of comparison between the outdoor temperature To and the indoor temperature Tr or a result of comparison between the amount of change in the indoor temperature Tr and the reference temperature difference T. In addition, the control unit 47 provides instructions to the fan driving unit 45 and the switch driving unit 46 on the basis of the determined operation.

The fan driving unit 45 controls drive, halt, and the volume of output air of the supply fan 30 and the exhaust fan 31 on the basis of the operation determined by the control unit 47.

The switch driving unit 46 controls the switching means 37 on the basis of the operation determined by the control unit 47.

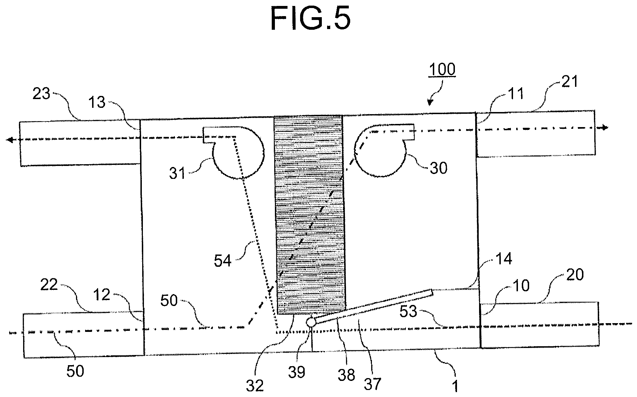

Next, the heat exchange ventilation operation and the normal ventilation operation will be explained with reference to FIGS. 4 and 5. FIG. 4 is a configuration diagram illustrating a schematic configuration of the heat exchange ventilator 100 during the heat exchange ventilation operation, and FIG. 5 is a configuration diagram illustrating a schematic configuration of the heat exchange ventilator 100 during the normal ventilation operation.

First, the heat exchange ventilation operation will be explained with reference to FIG. 4. The heat exchange ventilation operation is an operation of making heat exchange between the outdoor air and the indoor air, and then making the outdoor air supplied into the room. The switching plate 38 is set in contact with a side face of the housing 1. Specifically, the switching plate 38 is set at a position where the switching plate 38 blocks a bypass air passage 54 through which air sucked through the indoor inlet port 10 bypasses the heat exchanger 32. In this manner, the exhaust air passage 51 is formed as a heat exchange exhaust air passage 52 connecting the indoor inlet port 10 to the outdoor outlet port 13 through the heat exchanger 32. In other words, in the heat exchange ventilation operation, the heat exchanger 32 is included in the supply air passage 50 and the exhaust air passage 51.

The heat exchange ventilation operation is carried out in the case where the room is cooled by the air conditioner 4, when the outdoor temperature is higher than the indoor temperature and the indoor temperature is higher than a set temperature of the air conditioner. The heat exchange ventilation operation is also carried out in the case where the room is heated and when the outdoor temperature is lower than the indoor temperature and the indoor temperature is lower than a set temperature of the air conditioner. Because the outdoor air is subjected to heat exchange and supplied with a temperature difference from the indoor air being reduced, the air-conditioning load in the room is prevented from increasing. In the heat exchange ventilation operation, the supply fan 30 and the exhaust fan 31 send air at a set air volume smaller than a maximum air volume. This set air volume may be an air volume set by a manufacturer or an air volume set by a user with a remote controller or the like.

Next, the normal ventilation operation will be explained with reference to FIG. 5. The normal ventilation operation is an operation of making no heat exchange between the outdoor air and the indoor air, and making the outdoor air supplied into the room. The switching plate 38 is set in contact with the air passage forming member 14. Specifically, the switching plate 38 is set at a position where the bypass air passage 54 is opened up. In this manner, the exhaust air passage 51 is formed as a normal exhaust air passage 53 connecting the outdoor inlet port 12 to the indoor outlet port 11 around the heat exchanger 32.

The normal ventilation operation is carried out in the case where the room is to be cooled, when the outdoor temperature is lower than the indoor temperature and the set temperature of the air conditioner 4 is lower than the indoor temperature. The normal ventilation operation is also carried out in the case where the room is to be heated, when the outdoor temperature is higher than the indoor temperature and the set temperature of the air conditioner 4 is higher than the indoor temperature. Because the outdoor air is supplied without being subjected to heat exchange, the room is cooled or heated by the outdoor air. In the normal ventilation operation, the fan operates with the maximum volume of air sent thereby, so as to enhance the capacity of cooling or heating the room. In addition, because the air-conditioning load in the room is reduced by cooling or heating the room using the outdoor air, the power consumed to drive an air conditioner except for the heat exchange ventilator 100 is minimized.

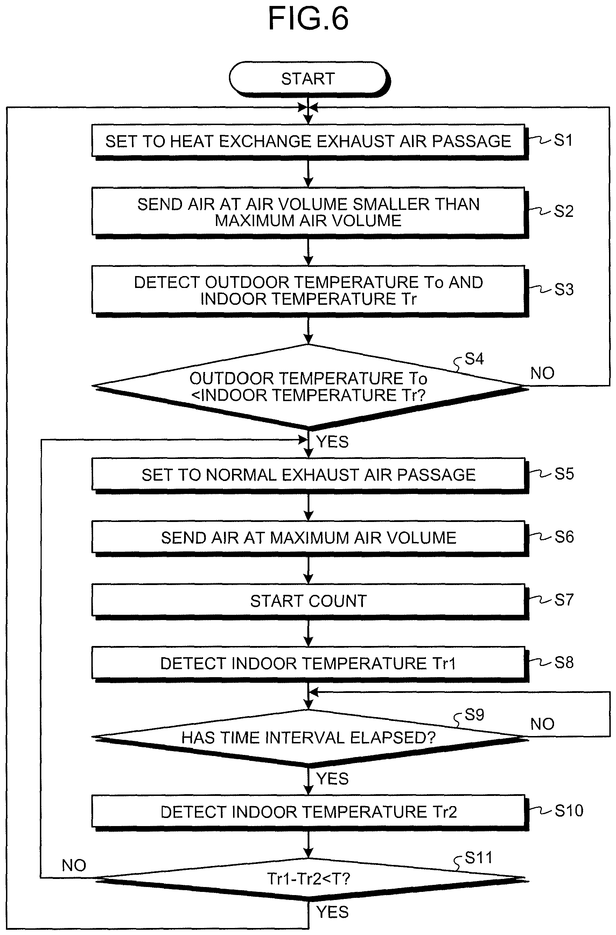

Next, the operation of the processor 40 will be explained with reference to FIG. 6. FIG. 6 is a flowchart illustrating processes performed by the processor 40 according to the first embodiment. In the present embodiment, description is given for a case where the indoor temperature is to be made lower than the outdoor temperature, such as a case where ventilation is carried out during a cooling operation.

When a user provides an instruction to the processor 40 to drive the heat exchange ventilator 100 using a remote controller or the like, the heat exchange ventilator 100 starts the heat exchange ventilation operation (START). In step S1, the control unit 47 instructs the switch driving unit 46 to drive the switching means 37. Upon receiving the instruction from the control unit 47, the driving unit 39 of the switching means 37 drives the switching plate 38 so that the switching plate 38 is situated at a position where the heat exchange exhaust air passage 52 is formed. As a result, the control unit 47 sets the exhaust air passage 51 to the heat exchange exhaust air passage 52.

After the heat exchange exhaust air passage 52 is set in step S1, the process proceeds to step S2. The control unit 47 instructs the fan driving unit 45 to make the supply fan 30 and the exhaust fan 31 send air at a set air volume. Upon receiving the instruction from the control unit 47, the supply fan 30 and the exhaust fan 31 start sending air. As a result, the control unit 47 makes the supply fan 30 and the exhaust fan 31 send air at an air volume smaller than the maximum air volume.

The heat exchange ventilation operation is started by the operation in steps S1 and S2 described above. In the heat exchange ventilation operation, the outdoor air is supplied through the outdoor inlet port 12, passes through the heat exchanger 32, and is discharged into the room through the indoor outlet port 11. Meanwhile, the indoor air is supplied through the indoor inlet port 10, passes through the heat exchanger 32, and is discharged to the outside of the room through the outdoor outlet port 13. The outdoor air is subjected to heat exchange with the indoor air and thus cooled to a temperature close to the indoor temperature Tr, and is supplied into the room.

After the heat exchange ventilation operation is started, the process proceeds to step S3, in which the outdoor temperature detecting unit 41 detects the outdoor temperature To from the outdoor temperature sensor 35. In addition, the indoor temperature detecting unit 42 detects the indoor temperature Tr from the indoor temperature sensor 36.

Upon detection of the outdoor temperature To and the indoor temperature Tr in step S3, the process proceeds to step S4. The control unit 47 determines whether or not the outdoor temperature To is lower than the indoor temperature Tr. If the outdoor temperature To is lower than the indoor temperature Tr (step S4: Yes), the process proceeds to step S5, in which the control unit 47 instructs the switch driving unit 46 to drive the switching means 37. Upon receiving the instruction from the control unit 47, the switching means 37 is set at a position where the exhaust air passage 51 serves as the normal exhaust air passage 53. As a result, the control unit 47 switches the exhaust air passage 51 from the heat exchange exhaust air passage 52 to the normal exhaust air passage 53.

If the outdoor temperature To is equal to or higher than the indoor temperature Tr in step S4 (step S4: No), the processes in steps S1 to S4 are repeated and the heat exchange ventilation operation is continued.

After the normal exhaust air passage 53 is set in step S5, the process proceeds to step S6, in which the control unit 47 instructs the fan driving unit 45 to make the supply fan 30 and the exhaust fan 31 send air at the maximum air volume. The maximum air volume is an air volume larger than the set air volume in the heat exchange ventilation operation. Upon receiving the instruction from the control unit 47, the supply fan 30 and the exhaust fan 31 switch the air flow to the maximum air volume. As a result, the control unit 47 makes the supply fan 30 and the exhaust fan 31 send air at the maximum air volume.

The operation is switched from the heat exchange ventilation operation to the normal ventilation operation by the operation in steps S5 and S6 described above. In the normal ventilation operation, the outdoor air passes through the heat exchanger 32 and is discharged into the room. Meanwhile, the indoor air bypasses the heat exchanger 32 and is discharged to the outside of the room. Because the outdoor air is supplied into the room without exchanging heat with the indoor air, the outdoor air having a temperature lower than the indoor temperature Tr is supplied.

After the switching to the normal ventilation operation in steps S5 and S6, the process proceeds to step S7, in which the timer 43 starts to count the time elapsed. After the count is started, the process proceeds to step S8, in which an indoor temperature Tr1 is detected as a first indoor temperature, and stored in the storage unit 44.

Upon detection of the indoor temperature Tr1 in step S8, the process proceeds to step S9, in which the control unit 47 determines whether or not the time interval Δt set for the count of the timer 43 has elapsed. If the set time interval Δt has elapsed in step S9 (step S9: Yes), the process proceeds to step S10, in which an indoor temperature Tr2 is detected as a second indoor temperature, and stored in the storage unit 44.

If the set time interval Δt has not elapsed in step S9 (step S9: No), the process of step S9 is repeated.

After detection of the indoor temperatures Tr1 and Tr2 in steps S8 to S10, a temperature difference T1-T2 is calculated as an amount of time change of the indoor temperature. The process proceeds to step S11, in which the control unit 47 determines whether or not the temperature difference Tr1-Tr2 that is a subtraction of the detected indoor temperature Tr2 from the detected indoor temperature Tr1 is smaller than the reference temperature difference T. If the temperature difference Tr1-Tr2 is smaller than the reference temperature difference T (step S11: Yes), operation under the normal ventilation operation results in a small change in the indoor temperature, and the effect of cooling the room is small. For this reason, the process returns to step S1, in which the control unit 47 switches the exhaust air passage 51 from the normal exhaust air passage 53 to the heat exchange exhaust air passage 52. The process then proceeds to step S2, in which the supply fan 30 and the exhaust fan 31 are made to send air at a set air volume. According to the operation described above, when the temperature difference Tr1-Tr2 is smaller than the reference temperature difference T, the operation is switched from the normal ventilation operation to the heat exchange ventilation operation.

If the temperature difference Tr1-Tr2 is equal to or larger than the reference temperature difference T in step S11 (step S11: No), the indoor temperature can be lowered through the normal ventilation operation, the process thus returns to step S5 and the normal ventilation operation is continued.

With the heat exchange ventilator 100 according to the first embodiment as described above, when the temperature difference Tr1-Tr2 between indoor temperatures detected while air is sent under the normal ventilation operation is smaller than the reference temperature difference T, the operation is switched from the normal ventilation operation to the heat exchange ventilation operation. By so doing, in a case where the air-conditioning effect of lowering the indoor temperature is small although the normal ventilation operation is carried out, the normal ventilation operation is prevented from continuing.

In order to reduce the air volume of a fan, the rotating speed of the fan is lowered by reducing a power outputted to the fan. Thus, as the air volume is smaller, consumption of energy for operating the fan can be lower. In the heat exchange ventilation operation, air is sent at an air volume smaller than the maximum air volume at which air is sent in the normal ventilation operation, and therefore consumption of energy for operating the supply fan 30 and the exhaust fan 31 can be minimized.

In addition, because the partition member 33 of the heat exchanger 32 is made of a material having high thermal conductivity and high moisture permeability, heat and moisture are exchanged between the indoor air and the outdoor air in the heat exchange ventilation operation. Thus, the outdoor air can be supplied into the room with the temperature difference between the outdoor air and the indoor air being made smaller and with the indoor humidity being adjusted. As described above, the heat exchange ventilation operation enables ventilation to be performed with the air-conditioning load in the room being prevented from increasing. Minimization in the air-conditioning load can prevent an air conditioner, such as an air conditioner, a dehumidifier, or a humidifier from operating and the output of such an air conditioner from increasing. Therefore, when the air-conditioning effect is small although the normal ventilation operation is carried out, switching to the heat exchange ventilation operation can minimize consumption of energy for operating the air conditioner 4 except for the heat exchange ventilator 100.

In addition, when the temperature difference Tr1-Tr2 is equal to or larger than the reference temperature difference T, the normal ventilation operation is continued, so that the air-conditioning load in the room can be reduced by making the indoor temperature closer to the outdoor temperature.

Although it is described that the supply fan 30 and the exhaust fan 31 is made to send air at the maximum air volume in the normal ventilation operation, the air volume in the normal ventilation operation is not limited to this example, and may be any air volume that is larger than that in the heat exchange ventilation operation.

In addition, although it is described that, when the process proceeds from step S11 to step S1 and the passage is switched from the normal exhaust air passage 53 to the heat exchange exhaust air passage 52, air is sent at the set air volume in step S2, the air volume may be any air volume that is smaller than that in the normal ventilation operation, and air may be sent at an air volume different from the set air volume in step S2.

In addition, although it is described that the reference temperature difference T is stored as a positive value, the reference temperature difference T may be stored as a negative value. In the case where the reference temperature difference T is a negative value, it is determined in step S11 whether or not a temperature difference Tr2-Tr1 is larger than the reference temperature difference T.

In addition, although it is described that the storage unit 44 stores the time interval Δt, it is sufficient that a timing at which the indoor temperature detecting unit 42 detects a temperature can be specified, and the storage unit 44 may store a time point.

In addition, although a configuration in which the indoor temperature sensor 36 and the outdoor temperature sensor 35 are provided inside the housing 1 is presented, they may be provided outside the housing 1.

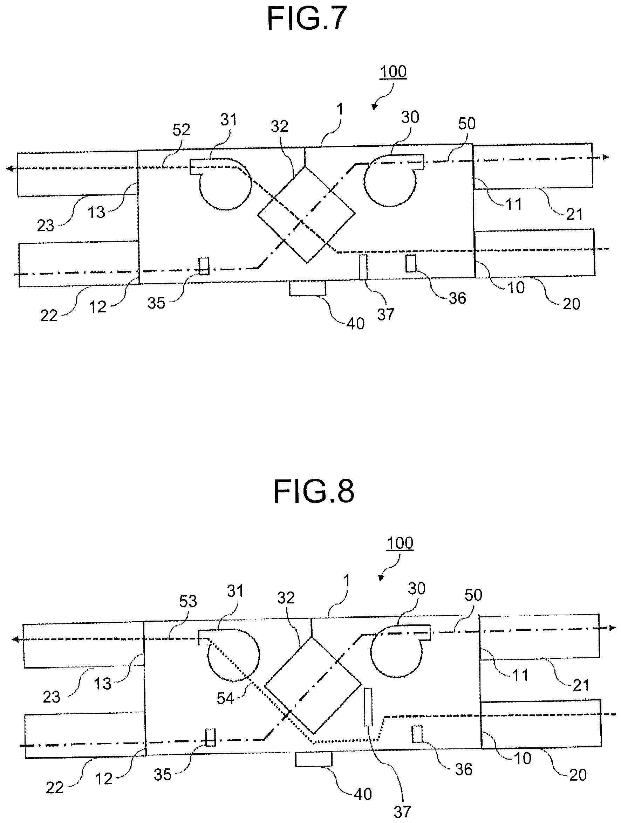

In addition, although the switching means 37 in which the switching plate 38 is turned by the driving unit is presented, the configuration therefor is not limited to this example as long as switching between the heat exchange exhaust air passage 52 and the normal exhaust air passage 53 is achieved. FIGS. 7 and 8 illustrate a modification of the first embodiment. FIG. 7 is a configuration diagram illustrating a schematic configuration of the heat exchange ventilator 100 during the heat exchange ventilation operation, and FIG. 8 is a configuration diagram illustrating a schematic configuration of the heat exchange ventilator 100 during the normal ventilation operation. In the modification, the switching means 37 is vertically movable. In the case of the heat exchange ventilation operation illustrated in FIG. 7, the switching means 37 is set at a position lower than that in the normal ventilation operation in the housing 1. In other words, the switching means 37 is set at a position where the switching means 37 blocks the bypass air passage 54. In contrast, in the case of the normal ventilation operation illustrated in FIG. 8, the switching means 37 is set at an upper position in the housing 1. In other words, the switching means 37 is set at a position where the bypass air passage 54 is opened up.

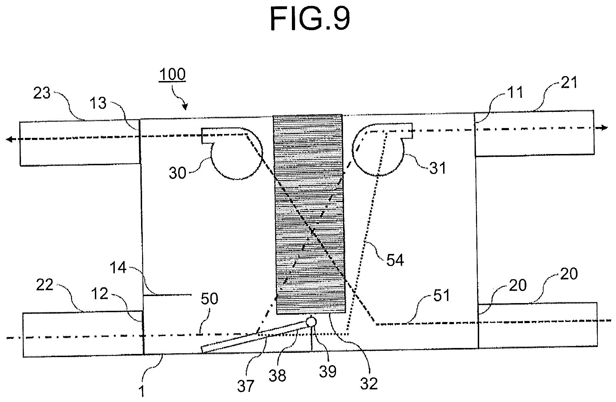

In addition, although it is described that the exhaust air passage 51 is switched to the heat exchange exhaust air passage 52 or the normal exhaust air passage 53 in the normal ventilation operation, it is sufficient that at least one of the supply air passage 50 and the exhaust air passage 51 bypasses the heat exchanger 32, and the supply air passage 50 may be switched as illustrated in FIG. 9. FIG. 9 is a configuration diagram illustrating a schematic configuration of the heat exchange ventilator 100 in a case where the switching means 37 switches the supply air passage 50.
In a case where the switching plate 38 is set at a position where the switching plate 38 blocks the bypass air passage 54, the supply air passage 50 is formed as a heat exchange supply air passage connecting the outdoor inlet port 12 to the indoor outlet port 11 through the heat exchanger 32. In a case where the switching plate 38 is set at a position where the bypass air passage 54 is opened up, the supply air passage 50 is formed as a normal supply air passage connecting the indoor inlet port 10 to the outdoor outlet port 13 bypassing the heat exchanger 32.

In addition, it is described that the supply fan 30 and the exhaust fan 31 send air at the same air volume, but the set air volumes of the supply fan 30 and the exhaust fan 31 may be different from each other. Reduction in the air volume of at least one of the fans when the temperature difference Tr1-Tr2 is smaller than the reference temperature difference T enables consumption of energy for operating the fans to be reduced.

In addition, although it is described that the temperature difference Tr1-Tr2 is used as an amount of time change of the state of the indoor air, the present invention is not limited to this example, and a temperature change rate may also be used therefor. The temperature change rate is a value obtained by dividing the temperature difference Tr1-Tr2 by a time length from the detection of the indoor temperature Tr1 until the detection of the indoor temperature Tr2. In this case, the storage unit 44 stores therein a reference temperature change rate as a threshold.

### Second Embodiment.

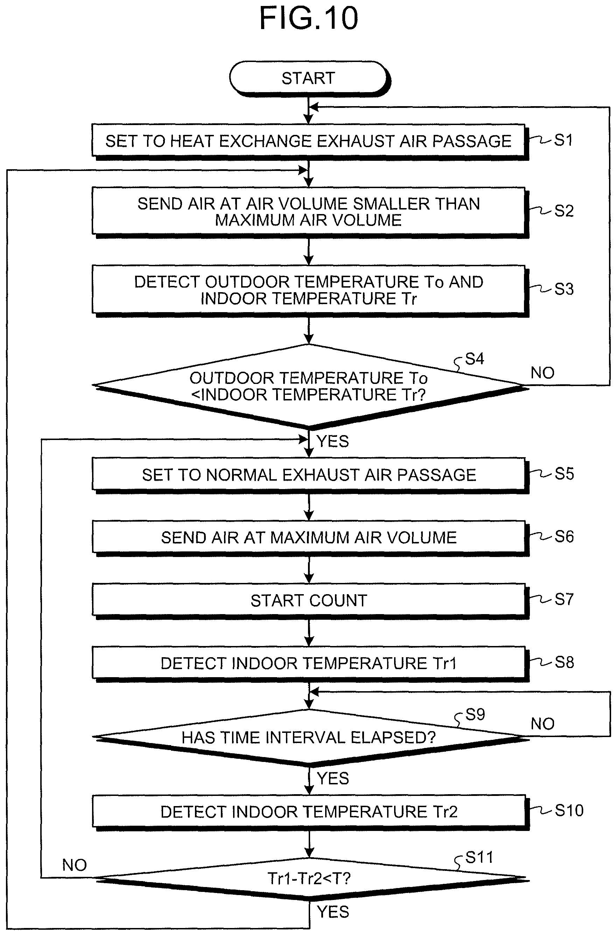

In the first embodiment, the passage is switched from the normal exhaust air passage 53 to the heat exchange exhaust air passage 52 when the temperature difference Tr1-Tr2 is smaller than the reference temperature difference T, but in a second embodiment, the exhaust air passage 51 is not switched and the air volume of the fan is decreased. An operation of the processor 40 of the heat exchange ventilator 100 according to the second embodiment will be explained with reference to FIG. 10. FIG. 10 is a flowchart illustrating processes performed by the processor 40 according to the second embodiment. In the second embodiment, differences from the first embodiment will be mainly described, and the same components as those in the first embodiment will be represented by the same reference symbols and description thereof will be omitted.

If the temperature difference Tr1-Tr2 is smaller than the reference temperature difference T in step S11 (step S11: Yes), the process proceeds to step S2. In step S2, the control unit 47 makes the supply fan 30 and the exhaust fan 31 send air at a set air volume. Thereafter, the processes in steps S3 to S11 are repeated.

With the heat exchange ventilator 100 according to the second embodiment as described above, when the temperature difference Tr1-Tr2 is smaller than the reference temperature difference T, the supply fan 30 and the exhaust fan 31 send air at a set air volume. Because the air volume is reduced in the state in which the normal exhaust air passage 53 is formed, consumption of energy for operating the supply fan 30 and the exhaust fan 31 is minimized while the outdoor air is supplied into the room.

In addition, because the number of times the switching means 37 is operated is smaller than that in the case where the passage is switched from the normal exhaust air passage 53 to the heat exchange exhaust air passage 52 as in the first embodiment, degradation in components is restrained. In addition, consumption of energy for driving the switching means 37 is minimized.

### Third Embodiment.

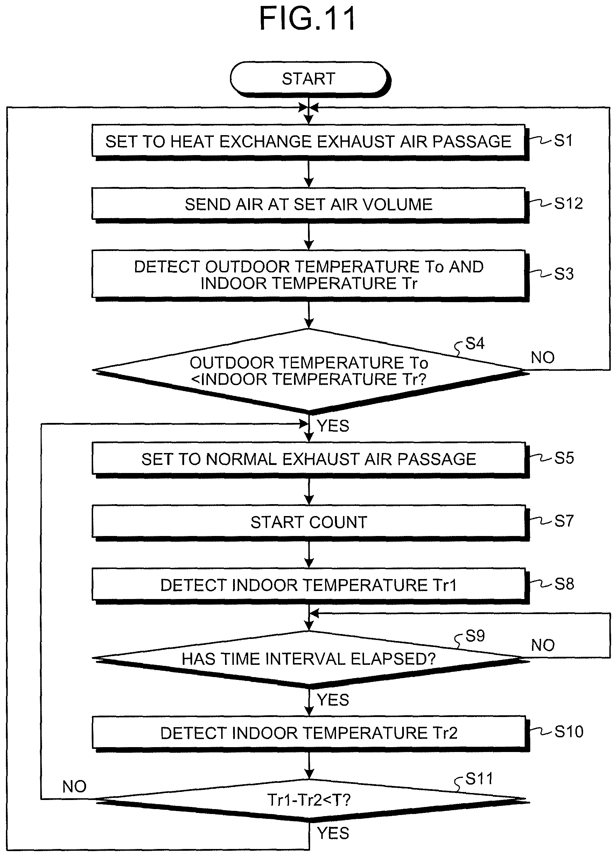

In the first embodiment, the supply fan 30 and the exhaust fan 31 send air at different air volumes between the heat exchange ventilation operation and the normal ventilation operation, but in a third embodiment, they send air at the same air volume therebetween. An operation of the processor 40 of the heat exchange ventilator 100 according to the third embodiment will be explained with reference to FIG. 11. FIG. 11 is a flowchart illustrating processes performed by the processor 40 according to the third embodiment. In the third embodiment, differences from the first embodiment will be mainly described, and the same components as those in the first embodiment will be represented by the same reference symbols and description thereof will be omitted.

After the heat exchange exhaust air passage 52 is set in step S1, the process proceeds to step S12, in which the supply fan 30 and the exhaust fan 31 are made to send air at a set air volume. The heat exchange ventilation operation is thus started.

Thereafter, if the outdoor temperature To is lower than the indoor temperature Tr in step S4 (step S4: Yes), the exhaust air passage 51 is set to the normal exhaust air passage 53. The air volume at which air is sent in the normal ventilation operation is a set air volume equal to an air volume at which air is sent in the heat exchange ventilation operation. The operation is switched from the heat exchange ventilation operation to the normal ventilation operation by the operation described above.

In the heat exchange ventilator 100 according to the third embodiment as described above, the air volume at which air is sent in the normal ventilation operation is the same as the air volume at which air is sent in the heat exchange ventilation operation. Therefore, the ventilation amount is not made smaller in the heat exchange ventilation operation than in the normal ventilation operation unlike the first embodiment. As a result, when the heat exchange ventilation operation is carried out, it is possible to prevent the air-conditioning load from increasing without lowering the ventilation capacity.

### Fourth Embodiment.

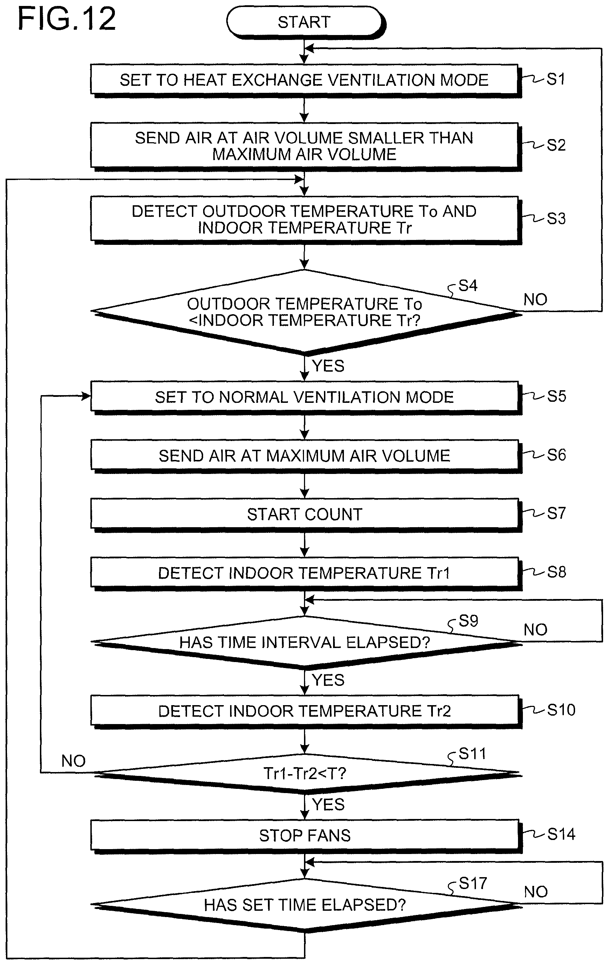

In the first embodiment, the supply fan 30 and the exhaust fan 31 are driven while the heat exchange ventilator 100 is in operation, but in a fourth embodiment, the supply fan 30 and the exhaust fan 31 are stopped when the temperature difference Tr1-Tr2 is smaller than the reference temperature difference T. An operation of the processor 40 of the heat exchange ventilator 100 according to the fourth embodiment will be explained with reference to FIG. 12. FIG. 12 is a flowchart illustrating processes performed by the processor 40 according to the fourth embodiment. In the fourth embodiment, differences from the first embodiment will be mainly described, and the same components as those in the first embodiment will be represented by the same reference symbols and description thereof will be omitted.

The heat exchange ventilator 100 has a night mode in which the normal ventilation operation is automatically started or stopped when no one is present in the room or the number of people in the room is small at night or the like. In the night mode, the normal ventilation operation is carried out when the outdoor temperature To is lower than the indoor temperature Tr, so as to prevent the indoor temperature from becoming higher than the outdoor temperature. In this condition, when the outdoor temperature To is equal to or higher than the indoor temperature Tr, the supply fan 30 and the exhaust fan 31 are stopped and the normal ventilation operation and the heat exchange ventilation operation are not carried out. Because the room can be air-conditioned by the operation in the night mode, air conditioners other than the heat exchange ventilator 100 need not be operated.

In the night mode of the heat exchange ventilator 100, when the temperature difference Tr1-Tr2 detected while air is sent by the normal ventilation operation is equal to or larger than the reference temperature difference T, the normal ventilation operation is continued. In contrast, when the temperature difference Tr1-Tr2 is smaller than the reference temperature difference T, the normal ventilation operation is stopped.

If the temperature difference Tr1-Tr2 is smaller than the reference temperature difference T in step S11 (step S11: Yes), the process proceeds to step S14, in which the control unit 47 stops the supply fan 30 and the exhaust fan 31. After the supply fan 30 and the exhaust fan 31 are stopped, the timer 43 starts counting the time elapsed, and the process proceeds to step S17, in which the control unit 47 determines whether or not a set time has elapsed. If the set time has elapsed (step S17: Yes), the process returns to step S3, and the processes of steps S3 to S17 are repeated.

In step S14, since the supply fan 30 and the exhaust fan 31 are stopped, the normal ventilation operation is stopped. The heat exchange ventilator 100 detects the outdoor temperature To and the indoor temperature Tr at the predetermined time interval Δt even while the normal ventilation operation is stopped. In this condition, if the outdoor temperature To is lower than the indoor temperature Tr in step S4 (step S4: Yes), the normal ventilation operation is started again.

With the heat exchange ventilator 100 according to the fourth embodiment as described above, when the temperature difference Tr1-Tr2 is smaller than the reference temperature difference T, the supply fan 30 and the exhaust fan 31 are stopped. Because the ventilation operation is prevented from continuing in the case where the air-conditioning effect of lowering the indoor temperature is small although the normal ventilation operation is carried out, consumption of energy for operating the supply fan 30 and the exhaust fan 31 can be minimized.

In addition, when the temperature difference Tr1-Tr2 is equal to or larger than the reference temperature difference T or when the outdoor temperature To is lower than the indoor temperature Tr, the normal ventilation operation is carried out. Because the normal ventilation operation is carried out, the indoor temperature is prevented from becoming higher than the outdoor temperature. Prevention of the indoor temperature from becoming high enables the air conditioner 4 to be operated after the night mode is terminated and can prevent the output of the air conditioner 4 from increasing. Therefore, consumption of energy for driving the air conditioner 4 other than the heat exchange ventilator 100 can be minimized.

### Fifth Embodiment.

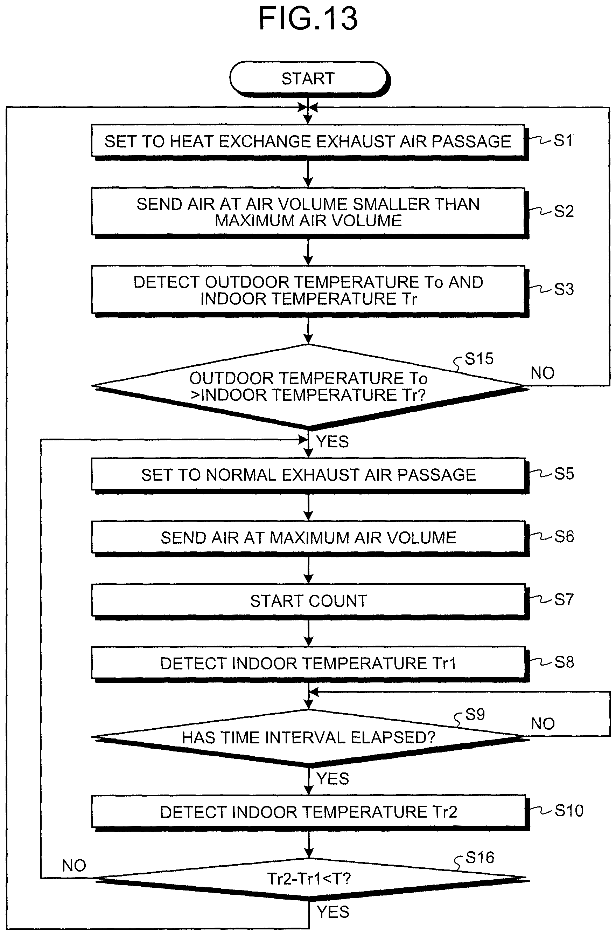

In the first embodiment, description is given for the operation of the heat exchange ventilator 100 in the case where the indoor temperature is to be lower than the outdoor temperature, such a case where ventilation is carried out during a cooling operation, but in a fifth embodiment, description is given for an operation of the heat exchange ventilator 100 in a case where the indoor temperature is to be higher than the outdoor temperature, such as a case where the ventilation is carried out during a heating operation. An operation of the processor 40 of the heat exchange ventilator 100 according to the fifth embodiment will be explained with reference to FIG. 13. FIG. 13 is a flowchart illustrating processes performed by the processor 40 according to the fifth embodiment. In the fifth embodiment, differences from the first embodiment will be mainly described, and the same components as those in the first embodiment will be represented by the same reference symbols and description thereof will be omitted.

The heat exchange ventilation operation is carried out when the outdoor temperature To is equal to or lower than the indoor temperature Tr. The outdoor air is subjected to heat exchange to be heated to a temperature close to the indoor air, and the heated air is then supplied into the room.

The normal ventilation operation is carried out when the outdoor temperature To is higher than the indoor temperature Tr. Because the outdoor air is supplied into the room without being subjected to heat exchange, the outdoor air having a temperature higher than the indoor temperature Tr is supplied therein.

After the heat exchange ventilation operation is started and the outdoor temperature To and the indoor temperature Tr are detected in step S3, the process proceeds to step S15. In step S15, it is determined whether or not the outdoor temperature To is higher than the indoor temperature Tr. If the outdoor temperature To is higher than the indoor temperature Tr in step S15 (step S15: Yes), the process proceeds to step S5, in which the control unit 47 sets the exhaust air passage 51 to the normal exhaust air passage 53.

If the outdoor temperature To is equal to or lower than the indoor temperature Tr in step S15 (step S15: No), the processes from step S1 to step S15 are repeated and the heat exchange ventilation operation is continued.

After the normal exhaust air passage 53 is set in step S5, the process proceeds to step S6, in which the control unit 47 makes the supply fan 30 and the exhaust fan 31 send air at the maximum air volume. As a result, the heat exchange ventilator 100 switches from the heat exchange ventilation operation to the normal ventilation operation.

After the switching to the normal ventilation operation and the detection of the indoor temperature Tr1 and the indoor temperature Tr2 in steps S7 to S10, the process proceeds to step S16. In step S16, the control unit 47 determines whether or not the temperature difference Tr2-Tr1 is smaller than the reference temperature difference T. If the temperature difference Tr2-Tr1 is smaller than the reference temperature difference T (step S16: Yes), the possible change in the indoor temperature is small and the possible effect of cooling the room is small even if the normal ventilation operation is carried out. In this condition, the process returns to step S1, in which the exhaust air passage 51 is switched from the normal exhaust air passage 53 to the heat exchange exhaust air passage 52. In addition, the process proceeds to step S2, in which the control unit 47 makes the supply fan 30 and the exhaust fan 31 send air at a set air volume smaller than the maximum air volume. Accordingly, when the temperature difference Tr2-Tr1 is smaller than the reference temperature difference T, the operation is switched from the normal ventilation operation to the heat exchange ventilation operation.

If the temperature difference Tr2-Tr1 is equal to or larger than the reference temperature difference T in step S16 (step S16: No), the indoor temperature can be increased through the normal ventilation operation, and so the process returns to step S5 and the normal ventilation operation is continued.

With the heat exchange ventilator 100 according to the fifth embodiment as described above, when the temperature difference Tr2-Tr1 between indoor temperatures detected while air is sent by the normal ventilation operation is smaller than the reference temperature difference T, the operation is switched from the normal ventilation operation to the heat exchange ventilation operation. Therefore, in a case where the possible effect of heating the room is small although the normal ventilation operation is carried out, the normal ventilation operation is prevented from continuing.

In the heat exchange ventilation operation, since air is sent at an air volume smaller than the maximum air volume at which air is sent in the normal ventilation operation, consumption of energy for operating the supply fan 30 and the exhaust fan 31 can be minimized.

Note that the reference temperature difference T may be stored as a negative value. In the case where the reference temperature difference T is a negative value, it is determined in step S16 whether or not the temperature difference Tr1-Tr2 is larger than the reference temperature difference T.

In addition, the operation in the fifth embodiment and any one or more of the operations presented in the second to fourth embodiments may be combined. Specifically, step S4 and step S11 in the second to fourth embodiments may be replaced with step S15 and step S16 in the fifth embodiment, respectively. In this manner, the operations in the second to fourth embodiments can be applied to the case where ventilation is performed during a heating operation.

### Sixth Embodiment.

In the first embodiment, the operation is based on the outdoor temperature To and the indoor temperature Tr, but in a sixth embodiment, an operation is based on an outdoor enthalpy Ho and an indoor enthalpy Hr. In the sixth embodiment, differences from the first embodiment will be mainly described, and the same components as those in the first embodiment will be represented by the same reference symbols and description thereof will be omitted.

The heat exchange ventilator 100 includes an indoor temperature and humidity sensor 60 instead of the indoor temperature sensor 36, and an outdoor temperature and humidity sensor 61 instead of the outdoor temperature sensor 35.

The indoor temperature and humidity sensor 60 detects an indoor temperature and an indoor humidity from the indoor air before passing through the heat exchanger 32.

The outdoor temperature and humidity sensor 61 detects an outdoor temperature and an outdoor humidity from the outdoor air before passing through the heat exchanger 32.

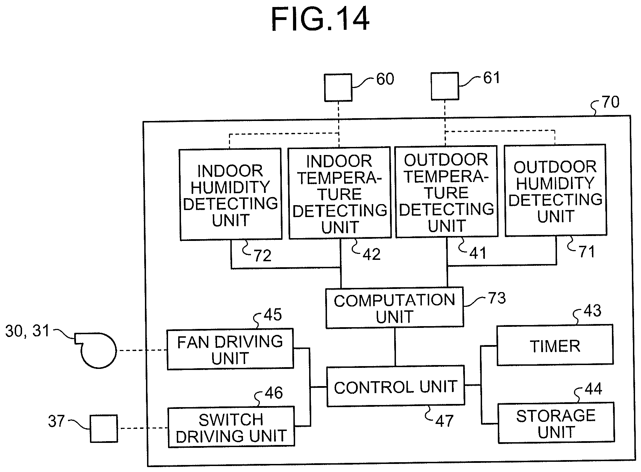

Next, a configuration of a processor 70 will be described with reference to FIG. 14. FIG. 14 is a block diagram illustrating a configuration of the processor 70 according to the sixth embodiment. The processor 70 includes an outdoor humidity detecting unit 71, an indoor humidity detecting unit 72, and a computation unit 73.

The outdoor humidity detecting unit 71 is connected with the outdoor temperature and humidity sensor 61, and detects an outdoor humidity. The indoor humidity detecting unit 72 is connected with the indoor temperature and humidity sensor 60, and detects an indoor humidity.

The computation unit 73 computes enthalpies from the detected temperatures and humidities. Specifically, the computation unit 73 computes an outdoor enthalpy Ho from the outdoor temperature To and the outdoor humidity Mo. In addition, the computation unit 73 computes an indoor enthalpy Hr as a state of the indoor air from the indoor temperature Tr and the indoor humidity Mr.

The storage unit 44 stores the computed indoor enthalpy Hr, the computed outdoor enthalpy Ho, and a set threshold. A reference enthalpy H is stored as the threshold. An enthalpy difference between indoor enthalpies Hr detected at a time interval Δt is compared with the reference enthalpy H.

The control unit 47 determines the operation of the heat exchange ventilator 100 on the basis of a result of comparison between the outdoor enthalpy Ho and the indoor enthalpy Hr or a result of comparison between an amount of change in the indoor enthalpy Hr and the reference enthalpy H.

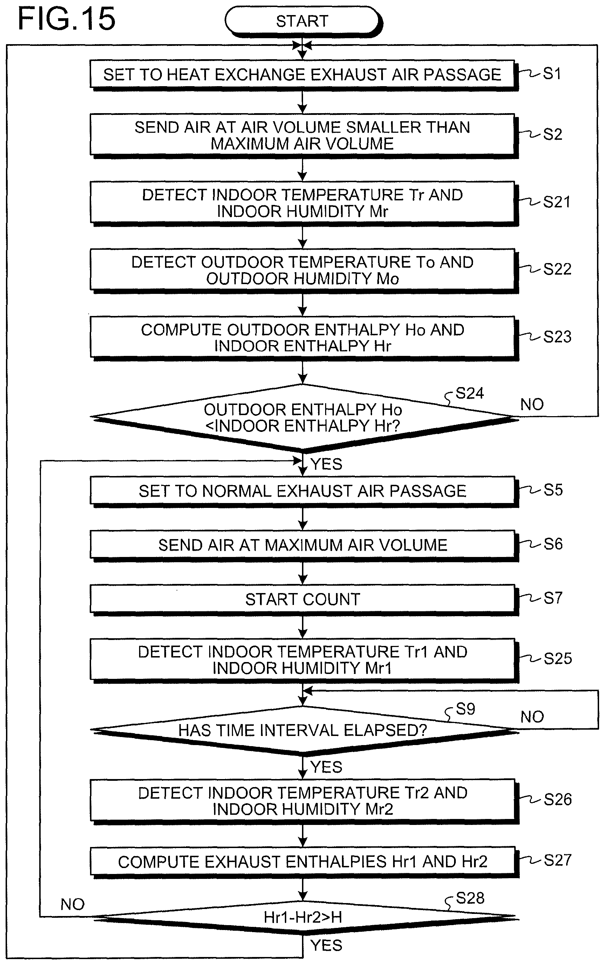

Next, the operation of the processor 70 will be explained with reference to FIG. 15. FIG. 15 is a flowchart illustrating processes performed by the processor 70 according to the sixth embodiment.

After the heat exchange ventilation operation is started in steps S1 and S2, the process proceeds to step S21, in which the control unit 47 detects the indoor temperature Tr and the indoor humidity Mr. In addition, the process proceeds to step S22, in which the outdoor temperature To and the outdoor humidity Mo are detected.

After detection of the temperature and the humidity, the process proceeds to step S23. The computation unit 73 computes the indoor enthalpy Hr and the outdoor enthalpy Ho. The process proceeds to step S24, in which the control unit 47 determines whether or not the outdoor enthalpy Ho is smaller than the indoor enthalpy Hr. If the outdoor enthalpy Ho is smaller than the indoor enthalpy Hr in step S24 (step S24: Yes), the process proceeds to step S5, in which the control unit 47 sets the exhaust air passage 51 to the normal exhaust air passage 53.

If the outdoor enthalpy Ho is equal to or larger than the indoor enthalpy Hr in step S24 (step S24: No), the process returns to step S1 and the heat exchange ventilation operation is continued.

After the normal exhaust air passage 53 is set in step S5, the process proceeds to step S25 through steps S6 and S7. In step S25, an indoor temperature Tr1 is detected as a first indoor temperature, and stored in the storage unit 44. In addition, an indoor humidity Mr1 is detected as a first indoor humidity, and stored in the storage unit 44.

If a set time interval Δt has elapsed after detection of the indoor temperature Tr1 and the indoor humidity Mr1 (step S9: Yes), the process proceeds to step S26, in which an indoor temperature Tr2 is detected as a second indoor temperature, and stored in the storage unit 44. In addition, an indoor humidity Mr2 is detected as a second indoor humidity, and stored in the storage unit 44.

After detection of the temperature and the humidity, the process proceeds to step S27, in which the computation unit 73 computes a first indoor enthalpy Hr1 from the indoor temperature Tr1 and the indoor humidity Mr1. In addition, the computation unit 73 computes a second indoor enthalpy Hr2 from the indoor temperature Tr2 and the indoor humidity Mr2.

After the enthalpies are computed in step S27, the control unit 47 calculates an enthalpy difference Hr1-Hr2, as an amount of time change of the indoor enthalpy Hr, by subtracting the indoor enthalpy Hr2 from the indoor enthalpy Hr1. The process proceeds to step S28, in which it is determined whether or not the calculated enthalpy difference Hr1-Hr2 is smaller than the reference enthalpy H. If the enthalpy difference Hr1-Hr2 is smaller than the reference enthalpy H (step S28: Yes), the process returns to step S1, in which the exhaust air passage 51 is switched from the normal exhaust air passage 53 to the heat exchange exhaust air passage 52. In addition, the process proceeds to step S2, in which the supply fan 30 and the exhaust fan 31 are made to send air at a set air volume smaller than the maximum air volume. According to the operation described above, when the enthalpy difference Hr1-Hr2 is smaller than the reference enthalpy H, the operation is switched from the normal ventilation operation to the heat exchange ventilation operation.

If the enthalpy difference Hr1-Hr2 is equal to or larger than the reference enthalpy H (step S28: No), the process returns to step S5 and the normal ventilation operation is continued.

The heat exchange ventilator 100 according to the sixth embodiment as described above operates on the basis of the outdoor enthalpy Ho and the indoor enthalpy Hr. Specifically, when the outdoor enthalpy Ho is smaller than the indoor enthalpy Hr, the operation is switched from the heat exchange ventilation operation to the normal ventilation operation. Because an enthalpy is a value computed from the detected temperature and humidity, the operation of the heat exchange ventilator 100 can be determined on the basis of comparison of temperatures and humidities. In this situation, in a case where the air-conditioning effect is small or the effect of humidity adjustment is small although the normal ventilation operation is carried out, the normal ventilation operation is prevented from continuing.

Although it is described that the outdoor temperature and humidity sensor 61 and the indoor temperature and humidity sensor 60 are used as a means for detecting a temperature and a humidity, any components that can detect a temperature and a humidity may be used, and a temperature sensor and a humidity sensor may be provided separately.

In addition, although it is described that the computation unit 73 computes an enthalpy from a temperature and a humidity stored in the storage unit 44, the computation unit 73 may compute an enthalpy when a temperature and a humidity are detected and then store the computed enthalpy in the storage unit 44.

Furthermore, although it is described that the reference enthalpy H is stored as a positive value, the reference enthalpy H may be stored as a negative value. In the case where the reference enthalpy H is a negative value, it is determined in step S28 whether or not the enthalpy difference Hr2-Hr1 is larger than the reference enthalpy H.

Besides, Although the outdoor temperature To and the indoor temperature Tr are detected immediately after the heat exchange ventilation operation or the normal ventilation operation is started in the first to sixth embodiments, the indoor temperature Tr or the indoor humidity Mr may be detected after a lapse of a predetermined time after the heat exchange ventilation operation is started. Because the operation is not switched during the predetermined time, it is possible to prevent immediate switching to the normal ventilation operation when the effect of changing the state of the indoor air in the normal ventilation operation is small.

### Industrial Applicability

A heat exchange ventilator 100 according to the present invention can be widely used as a heat exchange ventilator for household use, business use, and the like.

### Reference Signs List

1 housing; 2 ceiling; 3 floor; 4 air conditioner; 10 indoor inlet port; 11 indoor outlet port; 12 outdoor inlet port; 13 outdoor outlet port; 14 air passage forming member; 20 indoor inlet duct; 21 indoor outlet duct; 22 outdoor inlet duct; 23 outdoor outlet duct; 30 supply fan; 31 exhaust fan; 32 heat exchanger; 33 partition member; 34 spacer member; 35 outdoor temperature sensor; 36 indoor temperature sensor; 37 switching means; 38 switching plate; 39 driving unit; 40, 70 processor; 41 outdoor temperature detecting unit; 42 indoor temperature detecting unit; 43 timer; 44 storage unit; 45 fan driving unit; 46 switch driving unit; 47 control unit; 50 supply air passage; 51 exhaust air passage; 52 heat exchange exhaust air passage; 53 normal exhaust air passage; 54 bypass air passage; 60 indoor temperature and humidity sensor; 61 outdoor temperature and humidity sensor; 71 outdoor humidity detecting unit; 72 indoor humidity detecting unit; 73 computation unit; 100 heat exchange ventilator.

## Claims

1. A heat exchange ventilator (100) comprising:
a housing (1) in which a supply air passage (50) connecting between an outdoor inlet port (12) and an indoor outlet port (11), and an exhaust air passage (51) connecting between an indoor inlet port (10) and an outdoor outlet port (13) are formed;
a supply fan (30) configured to send outdoor air into a room;
an exhaust fan (31) configured to send indoor air to outside of the room;
a heat exchanger (32) configured to exchange heat between the outdoor air sent into the room and the indoor air sent to the outside of the room; and
a switching unit (37) configured to switch between a heat exchange ventilation operation for which the heat exchanger (32) is included in the supply air passage (50) and the exhaust air passage (51) and a normal ventilation operation for which at least one of the supply air passage (50) and the exhaust air passage (51) bypasses the heat exchanger (32),
**characterized by** a control unit (47) configured to, when an amount of change over time in indoor temperature or indoor enthalpy detected during the normal ventilation operation is smaller than a set threshold, cause the switching unit (37) to switch from the normal ventilation operation to the heat exchange ventilation operation and make a volume of output air of the supply fan (30) or the exhaust fan (31) during the heat exchange ventilation smaller than a volume of output air during the normal ventilation operation.

2. The heat exchange ventilator (100) according to claim 1, wherein the control unit (47) is configured to perform control for the supply fan (30) or the exhaust fan (31) to be stopped when the amount of time change in the state of the indoor air is smaller than the set threshold.

3. The heat exchange ventilator (100) according to claim 1 or 2, wherein the heat exchange ventilator (100) further comprises:
an indoor temperature sensor (36) configured to detect an indoor temperature from the indoor air before passing through the heat exchanger (32); and
an outdoor temperature sensor (35) configured to detect an outdoor temperature from the outdoor air before passing through the heat exchanger (32),
wherein the control unit (47) is configured to perform control for the amount of change over time to be detected as a temperature difference between a first indoor temperature and a second indoor temperature detected after a lapse of a set time length from detection of the first indoor temperature, and for the threshold to be set as a reference temperature difference.

4. The heat exchange ventilator (100) according to claim 1 or 2, wherein the heat exchange ventilator (100) further comprises:
an indoor temperature sensor (36) configured to detect an indoor temperature from the indoor air before passing through the heat exchanger (32); and
an outdoor temperature sensor (35) configured to detect an outdoor temperature from the outdoor air before passing through the heat exchanger (32),
wherein the control unit (47) is configured to perform control for the amount of change over time to be detected as a temperature change rate between a first indoor temperature and a second indoor temperature detected after a lapse of a set time length from detection of the first indoor temperature, and for the threshold to be set as a reference temperature change rate.

5. The heat exchange ventilator (100) according to claim 3 or 4, wherein the heat exchange ventilator (100) further comprises:
an indoor temperature sensor (36) configured to detect an indoor temperature from the indoor air before passing through the heat exchanger (32); and
an outdoor temperature sensor (35) configured to detect an outdoor temperature from the outdoor air before passing through the heat exchanger (32),
wherein the control unit (47) is configured to perform control for the switching unit (37) to switch from the heat exchange ventilation operation to the normal ventilation operation when an outdoor temperature is lower than an indoor temperature.

6. The heat exchange ventilator (100) according to claim 3 or 4, wherein the control unit (47) is configured to perform control for the switching unit (37) to switch from the heat exchange ventilation operation to the normal ventilation operation when an outdoor temperature is higher than an indoor temperature.

7. The heat exchange ventilator (100) according to claim 1 or 2, wherein the heat exchange ventilator (100) further comprises:
an indoor temperature and humidity sensor (60) configured to detect an indoor temperature and an indoor humidity from the indoor air before passing through the heat exchanger (32); and
an outdoor temperature and humidity sensor (61) configured to detect an outdoor temperature and an outdoor humidity from the outdoor air before passing through the heat exchanger (32),
wherein the control unit (47) is configured to perform control for the amount of change over time to be detected as an indoor enthalpy computed from an indoor temperature and an indoor humidity, and for the threshold to be set as a reference enthalpy.

8. The heat exchange ventilator (100) according to claim 7, wherein the control unit (47) is configured to perform control for the switching unit (37) to switch from the heat exchange ventilation operation to the normal ventilation operation when an outdoor enthalpy computed from an outdoor temperature and an outdoor humidity is smaller than the indoor enthalpy.

9. The heat exchange ventilator (100) according to claim 7, wherein the control unit (47) is configured to perform control for the switching unit (37) to switch from the heat exchange ventilation operation to the normal ventilation operation when an outdoor enthalpy computed from an outdoor temperature and an outdoor humidity is larger than the indoor enthalpy.

## Patentansprüche

1. Wärmetauscherventilator (100), der aufweist:
ein Gehäuse (1), in welchem ein Versorgungsluftdurchgang (50), der zwischen einem Außeneinlassanschluss (12) und einem Innenauslassanschluss (11) verbunden ist, und ein Abluftdurchgang (51), der zwischen einem Inneneinlassanschluss (10) und einem Außenauslassanschluss (13) verbunden ist, ausgebildet sind;
einen Versorgungslüfter (30), der eingerichtet ist, Außenluft in einen Raum zu senden;
einen Abluftventilator (31), der eingerichtet ist, Innenluft zur Außenseite des Raums zu senden;
einen Wärmetauscher (32), der eingerichtet ist, Wärme zwischen der Außenluft, die in den Raum gesendet wird, und der Innenluft, die zur Außenseite des Raums gesendet wird, auszutauschen; und
eine Schalteinheit (37), die eingerichtet ist, zwischen einem Wärmeaustausch-Belüftungsbetrieb, für den der Wärmetauscher (32) in dem Versorgungsluftdurchgang (50) und dem Abluftdurchgang (51) umfasst ist, und einem normalen Belüftungsbetrieb umzuschalten, für den der Versorgungsluftdurchgang (50) und/oder der Abluftdurchgang (51) den Wärmetauscher (32) umgehen,
**gekennzeichnet durch** eine Steuereinheit (47), die eingerichtet ist, wenn ein Betrag einer zeitlichen Änderung einer Innentemperatur oder einer Innenenthalpie, die während des normalen Belüftungsbetriebs erfasst wird, kleiner als eine eingestellte Schwelle ist, die Schalteinheit (37) dazu zu veranlassen, vom normalen Belüftungsbetrieb in den Wärmeaustausch-Belüftungsbetrieb umzuschalten und ein Volumen einer Ausgabeluft des Versorgungslüfters (30) oder des Abluftlüfters (31) während der Wärmeaustauschbelüftung kleiner als ein Volumen einer Ausgabeluft während des normalen Belüftungsbetriebs zu machen.

2. Wärmeaustauschventilator (100) nach Anspruch 1, wobei die Steuereinheit (47) eingerichtet ist, eine Steuerung für den Versorgungslüfter (30) oder den Abluftlüfter (31) so durchzuführen, dass er gestoppt wird, wenn der Betrag einer zeitlichen Änderung im Zustand der Innenluft kleiner als die eingestellte Schwelle ist.

3. Wärmeaustauschventilator (100) nach Anspruch 1 oder 2, wobei der Wärmeaustauschventilator (100) ferner aufweist:
einen Innentemperatursensor (36), der eingerichtet ist, eine Innentemperatur der Innenluft zu erfassen, bevor sie durch den Wärmetauscher (32) läuft; und
einen Außentemperatursensor (35), der eingerichtet ist, eine Außentemperatur der Außenluft zu erfassen, bevor sie durch den Wärmetauscher (32) läuft,
wobei die Steuereinheit (47) eingerichtet ist, eine Steuerung für den Betrag der zeitlichen Änderung, der als eine Temperaturdifferenz zwischen einer ersten Innentemperatur und einer zweiten Innentemperatur zu erfassen ist, die nach einem Ablauf einer eingestellten Zeitlänge von einer Erfassung der ersten Innentemperatur ab erfasst wird, und für die Schwelle durchzuführen, die als Referenztemperaturdifferenz einzustellen ist.

4. Wärmetauscherventilator nach Anspruch 1 oder 2, wobei der Wärmetauscherventilator (100) ferner aufweist:
einen Innentemperatursensor (36), der eingerichtet ist, eine Innentemperatur der Innenluft zu erfassen, bevor sie durch den Wärmetauscher (32) läuft; und
einen Außentemperatursensor (35), der eingerichtet ist, eine Außentemperatur der Außenluft zu erfassen, bevor sie durch den Wärmetauscher (32) läuft,
wobei die Steuereinheit (47) eingerichtet ist, eine Steuerung für den Betrag einer zeitlichen Änderung, der als eine Temperaturänderungsrate zwischen einer ersten Innentemperatur und einer zweiten Innentemperatur zu erfassen ist, die nach einem Ablauf einer eingestellten Zeitlänge ab einer Erfassung der ersten Innentemperatur erfasst wird, und für die Schwelle durchzuführen, die als eine Referenztemperaturänderungsrate einzustellen ist.

5. Wärmeaustauschventilator (100) nach Anspruch 3 oder 4, wobei der Wärmeaustauschventilator (100) ferner aufweist:
einen Innentemperatursensor (36), der eingerichtet ist, eine Innentemperatur der Innenluft zu erfassen, bevor sie durch den Wärmetauscher (32) läuft; und
einen Außentemperatursensor (35), der eingerichtet ist, eine Außentemperatur der Außenluft zu erfassen, bevor sie durch den Wärmetauscher (32) läuft,
wobei die Steuereinheit (47) eingerichtet ist, eine Steuerung für die Schalteinheit (37) durchzuführen, um aus dem Wärmeaustauschbelüftungsbetrieb in den normalen Belüftungsbetrieb umzuschalten, wenn eine Außentemperatur kleiner als eine Innentemperatur ist.

6. Wärmeaustauschventilator (100) nach Anspruch 3 oder 4, wobei die Steuereinheit (47) eingerichtet ist, eine Steuerung für die Schalteinrichtung (37) durchzuführen, um aus dem Wärmeaustausch-Belüftungsbetrieb in den normalen Belüftungsbetrieb umzuschalten, wenn eine Außentemperatur höher als eine Innentemperatur ist.

7. Wärmeaustauschventilator (100) nach Anspruch 1 oder 2, wobei der Wärmeaustauschventilator (100) ferner aufweist:
einen Innentemperatur- und Feuchtigkeitssensor (60), der eingerichtet ist, eine Innentemperatur und eine Innenfeuchtigkeit der Innenluft zu erfassen, bevor sie durch den Wärmetauscher (32) läuft; und
einen Außentemperatur- und Feuchtigkeitssensor (61), der eingerichtet ist, eine Außentemperatur und eine Außenfeuchtigkeit der Außenluft zu erfassen, bevor sie durch den Wärmetauscher (32) läuft,
wobei die Steuereinheit (47) eingerichtet ist, eine Steuerung für den Betrag einer zeitlichen Änderung durchzuführen, der als eine Innenenthalpie zu erfassen ist, die aus einer Innentemperatur und einer Innenfeuchtigkeit berechnet wird, und für die Schwelle, die als eine Referenzenthalpie einzustellen ist.

8. Wärmeaustauschventilator (100) nach Anspruch 7, wobei die Steuereinheit (47) eingerichtet ist, eine Steuerung für die Schalteinheit (37) durchzuführen, um aus dem Wärmeaustausch-Belüftungsbetrieb in den normalen Belüftungsbetrieb umzuschalten, wenn eine Außenenthalpie, die aus einer Außentemperatur und einer Außenfeuchtigkeit berechnet wird, kleiner als die Innenenthalpie ist.

9. Wärmeaustauschventilator (100) nach Anspruch 7, wobei die Steuereinheit (47) eingerichtet ist, eine Steuerung für die Schalteinheit (37) durchzuführen, um aus dem Wärmeaustausch-Belüftungsbetrieb in den normalen Belüftungsbetrieb umzuschalten, wenn eine Außenenthalpie, die aus einer Außentemperatur und einer Außenfeuchtigkeit berechnet wird, größer als die Innenenthalpie ist.

## Revendications

1. Dispositif de ventilation à échange de chaleur (100), comprenant :
un logement (1) dans lequel un passage d'air d'alimentation (50) effectuant la liaison entre un orifice d'entrée en environnement extérieur (12) et un orifice de sortie en environnement intérieur (11), et un passage d'air d'évacuation (51) effectuant la liaison entre un orifice d'entrée en environnement intérieur (10) et un orifice de sortie en environnement extérieur (13) sont formés ;
un ventilateur d'alimentation (30) configuré pour envoyer de l'air d'environnement extérieur dans une salle ;
un ventilateur d'évacuation (31) configuré pour envoyer de l'air d'environnement intérieur vers l'extérieur de la salle ;
un échangeur de chaleur (32) configuré pour échangeur de la chaleur entre l'air d'environnement extérieur envoyé dans la salle et l'air d'environnement intérieur envoyé vers l'extérieur de la salle ; et
une unité de permutation (37) configurée pour permuter entre un fonctionnement de ventilation à échange de chaleur pour lequel l'échangeur de chaleur (32) est inclus dans le passage d'air d'alimentation (50) et le passage d'air d'évacuation (51) et un fonctionnement de ventilation normal pour lequel au moins un du passage d'air d'alimentation (50) et du passage d'air d'évacuation (51) contourne l'échange de chaleur (32),
**caractérisé par** une unité de commande (47) configurée pour, lorsqu'une quantité de changement au fil du temps de température d'environnement intérieur ou d'enthalpie d'environnement intérieur détectée durant le fonctionnement de ventilation normal est plus petite qu'un seuil réglé, faire en sorte que l'unité de permutation (37) permute du fonctionnement de ventilation normal au fonctionnement de ventilation à échange de chaleur, et rendre un volume d'air de sortie du ventilateur d'alimentation (30) ou du ventilateur d'évacuation (31) durant la ventilation à échange de chaleur plus petit qu'un volume d'air de sortie durant le fonctionnement de ventilation normal.

2. Dispositif de ventilation à échange de chaleur (100) selon la revendication 1, dans lequel l'unité de commande (47) est configurée pour effectuer une commande pour que le ventilateur d'alimentation (30) ou le ventilateur d'évacuation (31) soit arrêté lorsque la quantité de changement temporel dans l'état de l'air d'environnement intérieur est plus petite que le seuil réglé.

3. Dispositif de ventilation à échange de chaleur (100) selon la revendication 1 ou 2, dans lequel le dispositif de ventilation à échange de chaleur (100) comprend en outre :
un capteur de température d'environnement intérieur (36) configuré pour détecter une température d'environnement intérieur, depuis l'air d'environnement intérieur, avant le passage à travers l'échange de chaleur (32) ; et
un capteur de température d'environnement extérieur (35) configuré pour détecter une température d'environnement extérieur, depuis l'air d'environnement extérieur, avant le passage à travers l'échange de chaleur (32),
dans lequel l'unité de commande (47) est configurée pour effectuer une commande pour que la quantité de changement au fil du temps soit être détectée sous forme de différence de température entre une première température d'environnement intérieur et une seconde température d'environnement intérieur détectées après une expiration d'une longueur temporelle réglée, depuis la détection de la première température d'environnement intérieur, et pour que le seuil soit réglé en tant que différence de température de référence.

4. Dispositif de ventilation à échange de chaleur (100) selon la revendication 1 ou 2, dans lequel le dispositif de ventilation à échange de chaleur (100) comprend en outre :
un capteur de température d'environnement intérieur (36) configuré pour détecter une température d'environnement intérieur, depuis l'air d'environnement intérieur, avant le passage à travers l'échange de chaleur (32) ; et
un capteur de température d'environnement extérieur (35) configuré pour détecter une température d'environnement extérieur, depuis l'air d'environnement extérieur, avant le passage à travers l'échange de chaleur (32),
dans lequel l'unité de commande (47) est configurée pour effectuer une commande pour que la quantité de changement au fil du temps soit détectée sous forme de taux de changement de température entre une première température d'environnement intérieur et une seconde température d'environnement intérieur détectées après une expiration d'une longueur temporelle réglée, depuis la détection de la première température d'environnement intérieur, et pour que le seuil soit réglé en tant que taux de changement de température de référence.

5. Dispositif de ventilation à échange de chaleur (100) selon la revendication 3 ou 4, dans lequel le dispositif de ventilation à échange de chaleur (100) comprend en outre :
un capteur de température d'environnement intérieur (36) configuré pour détecter une température d'environnement intérieur, depuis l'air d'environnement intérieur, avant le passage à travers l'échange de chaleur (32) ; et
un capteur de température d'environnement extérieur (35) configuré pour détecter une température d'environnement extérieur, depuis l'air d'environnement extérieur, avant le passage à travers l'échange de chaleur (32),
dans lequel l'unité de commande (47) est configurée pour effectuer une commande pour que l'unité de permutation (37) permute du fonctionnement de ventilation à échange de chaleur au fonctionnement de ventilation normal lorsqu'une température d'environnement extérieur est plus basse qu'une température d'environnement intérieur.

6. Dispositif de ventilation à échange de chaleur (100) selon la revendication 3 ou 4, dans lequel l'unité de commande (47) est configurée pour effectuer une commande pour que l'unité de permutation (37) permute du fonctionnement de ventilation à échange de chaleur au fonctionnement de ventilation normal lorsqu'une température d'environnement extérieur est plus haute qu'une température d'environnement intérieur.

7. Dispositif de ventilation à échange de chaleur (100) selon la revendication 1 ou 2, dans lequel le dispositif de ventilation à échange de chaleur (100) comprend en outre :
un capteur de température et d'humidité d'environnement intérieur (60) configuré pour détecter une température d'environnement intérieur et une humidité d'environnement intérieur, depuis l'air d'environnement intérieur, avant le passage à travers l'échange de chaleur (32) ; et
un capteur et d'humidité de température d'environnement extérieur (61) configuré pour détecter une température d'environnement extérieur et une humidité d'environnement extérieur, depuis l'air d'environnement extérieur, avant le passage à travers l'échange de chaleur (32),
dans lequel l'unité de commande (47) est configurée pour effectuer une commande pour que la quantité de changement au fil du temps soit détectée sous forme d'enthalpie d'environnement intérieur calculée à partir d'une température d'environnement intérieur et d'une humidité d'environnement intérieur, et pour que le seuil soit réglé en tant qu'enthalpie de référence.

8. Dispositif de ventilation à échange de chaleur (100) selon la revendication 7, dans lequel l'unité de commande (47) est configurée pour effectuer une commande pour que l'unité de permutation (37) permute du fonctionnement de ventilation à échange de chaleur au fonctionnement de ventilation normal lorsqu'une enthalpie d'environnement extérieur calculée à partir d'une température d'environnement extérieur et d'une humidité d'environnement extérieur est plus petite que l'enthalpie d'environnement intérieur.

9. Dispositif de ventilation à échange de chaleur (100) selon la revendication 7, dans lequel l'unité de commande (47) est configurée pour effectuer une commande pour que l'unité de permutation (37) permute du fonctionnement de ventilation à échange de chaleur au fonctionnement de ventilation normal lorsqu'une enthalpie d'environnement extérieur calculée à partir d'une température d'environnement extérieur et d'une humidité d'environnement extérieur est supérieure à l'enthalpie d'environnement intérieur.
